# EUROPÄISCHE PATENTSCHRIFT

(11) **EP 3 558 486 B1**
(45) Veröffentlichungstag und Bekanntmachung des Hinweises auf die Patenterteilung: **17.03.2021**
(21) Anmeldenummer: 17825191.4
(22) Anmeldetag: 18.12.2017
(51) Int. Cl.: B01D 39/16, B01D 39/20

(54) **HOCHEFFIZIENTES FILTERMEDIUM**
HIGHLY EFFICIENT FILTER MEDIUM
MATÉRIAU FILTRANT HAUTEMENT EFFICACE

(30) Priorität: 21.12.2016 DE 102016015248
(43) Veröffentlichungstag der Anmeldung: 30.10.2019
(73) Patentinhaber: Johns Manville Europe GmbH, 86399 Bobingen (DE)
(72) Erfinder: UMMINGER, Jürgen, 97922 Lauda-Königshofen (DE)
(74) Vertreter: Dörr, Klaus
(86) Internationale Anmeldenummer: PCT/EP2017/083256
(87) Internationale Veröffentlichungsnummer: WO 2018/114764

(56) Entgegenhaltungen:
- EP-A2- 2 604 322
- US-A- 5 993 501
- US-A1- 2006 242 933
- US-A1- 2015 157 969

## Beschreibung

Die vorliegende Erfindung betrifft einen Filter aus einem Filtermedium mit einer multi-median Faserverteilung, ein Verfahren zu dessen Herstellung und die Verwendung des erfindungsgemäßen Filters.

Der Einsatz von Filtern, insbesondere mehrlagigen Filtermedien, ist seit langem bekannt. So werden beispielsweise Luftfilter seit langem im Automobilsektor, in Klimaanlagen, Innenraumfiltern, Pollenfiltern, Reinraumfiltern, Haushaltsfiltern usw. eingesetzt. Auch in der Filterung von flüssigen Medien werden Filter seit langem eingesetzt. Als Beispiele hierfür sind Ölfilter und Hydraulikfilter.

In Abhängigkeit von dem Anwendungsgebiet werden die Filter angepasst um eine ausreichende Filtrationseffizienz und Standzeit zu erreichen. So werden Partikel-Luftfilter für die allgemeine Raumlufttechnik (nach EN 779) als Coarse-, Medium- und Fine-Filter in der Luft/Gasfiltration als auch zur Flüssigkeitsfiltration eingesetzt, während Schwebstofffilter (nach EN 1822) im Bereich EPA und HEPA (Luft) oder Wasseraufbereitung eingesetzt werden.

Aus US-A-5993501 sind mehrlagige Filtermedien und Filter bekannt, die aus einer steifen, plissierbaren Basisschicht, der eigentlichen Filterschicht und einer Abdeckung bestehen. Diese Filter sind bereits gut für die Gas-(Luft-) und Flüssigkeitsfiltration geeignet

Aus EP-A-1134013 sind mehrlagige plissierte Filtermedien und Filter bekannt, die aus einer steifen, plissierbaren Basisschicht, der eigentlichen Filterschicht und einer Abdeckung bestehen. Diese Filter sind aus polymeren, schmelzbinderverfestigten Mikrofasern aufgebaut und bereits gut für die Gas-(Luft-) und Flüssigkeitsfiltration geeignet.

Aus EP-A-0878226 sind mehrlagige Filtermedien und Filter bekannt, die aus feinen Polymer- und Glasfasern aufgebaut werden. Diese Filter sind bereits gut für die Gas-(Luft-) und Flüssigkeitsfiltration geeignet.

Aus EP-A-1656981 sind Filtermedien und Filter bekannt, die aus feinen Glasfasern aufgebaut werden. Diese Filter sind bereits gut für die Gas-(Luft-) und Flüssigkeitsfiltration geeignet.

Aus EP2604322 sind Filtermedien und Filter bekannt, die aus feinen Glasfasern aufgebaut werden. Diese Filter sind bereits ebenfalls gut für die Gas-(Luft-) und Flüssigkeitsfiltration geeignet.

Wie bereits ausgeführt werden Filtermaterialen zur Luftfiltration nach DIN/EN779 sowie ASHRAE 52.2 weltweit gefertigt und für vielfältige Anwendungen eingesetzt. Bei solchen Hocheffizienzfiltern sind die Filtereffizienz und der Druckabfall durch das Filtermedium die das Filter wesentlich bestimmenden Parameter. Die steigenden Energiekosten haben nun zu einer neuen Beurteilung der sogenannten Energieeffizienz des Filters geführt. In Europa wird diese nach EUROVENT 01/2015 klassifiziert. Durch die Neuerung kam die Energieeffizienzklasse A+ hinzu. Die hierbei gestellten Anforderungen an die Filtermaterialien sind derart gestiegen, dass herkömmliche Filtermedien diese Anforderungen hinsichtlich Differenzdruck/Druckabfall und Abscheidegrad nicht mehr erfüllen können.

Somit besteht ein Bedarf an neuartigen Filtermaterialien, welche die neu geschaffene Energieeffizienzklasse A+ nach EUROVENT 01/2015 klassifiziert erfüllen und andererseits mit bereits verfügbaren Produktionsanlagen herstellbar und auch ohne weitere kundenseitige Anpassungen eingesetzt werden können.

Gegenstand der vorliegenden Erfindung ist somit ein Filter aus einem mehrlagigen Filtermedium umfassend:
a) mindestens eine textile Stützschicht (Schicht 3), vorzugsweise eine Vliesschicht, aus synthetischen, polymeren Fasern, Glasfasern oder Gemische derselben wobei
   a1) die textile Stützschicht, vorzugsweise das Vlies, ein Flächengewicht von 10 bis 300 g/m² aufweist,
   a2) die Fasern der textilen Stützschicht, vorzugsweise des Vlieses, einen Durchmesser im Bereich 2 bis 25 dtex für polymere Fasern bzw. einen Durchmesser von 0,5 - 15µm für Glasfasern aufweisen,
   a3) die textile Stützschicht, vorzugsweise das Vlies, durch chemische Binder oder durch thermoplastische Binder verfestigt ist,
   a4) die textile Stützschicht, vorzugsweise das Vlies, eine Luftdurchlässigkeit von mindestens 750 l/m²sec aufweist,
b) mindestens eine Filterschicht (Schicht 2), die auf mindestens einer Seite des Stützvlieses angebracht ist, wobei die Filterschicht aus Glasfasern aufgebaut wird und
   b1) die Filterschicht aus Glasfasern ein Vlies ist, dessen Flächengewicht zwischen 25 und 300 g/m² beträgt,
   b2) das Glasfaservlies durch chemische Binder verfestigt,
   b3) die Auftragsmenge des chemischen Binders 5 bis 30 Gew.-% bezogen auf das Flächengewicht der Filterschicht (Schicht 2) beträgt,
c) mindestens eine textile Deckschicht (Schicht 1) die auf der Filterschicht gemäß b) aufgebracht wird, wobei die Deckschicht aus synthetischen, polymeren Fasern aufgebaut wird und
   c1) die textile Deckschicht, vorzugsweise das Vlies, ein Flächengewicht von 20 bis 100 g/m² aufweist,
   c2) die Fasern der textilen Deckschicht, vorzugsweise des Vlieses, einen Durchmesser im Bereich 2 bis 25 dtex aufweisen,
   c3) die textile Deckschicht, vorzugsweise das Vlies, durch chemische Binder oder durch thermoplastische Binder verfestigt ist,
   c4) die Auftragsmenge des chemischen Binders bzw. des thermoplastischen Binders 5 bis 25 Gew.-% bezogen auf das Flächengewicht der Deckschicht (Schicht 1) beträgt,
   c5) die textile Deckschicht, vorzugsweise das Vlies Luftdurchlässigkeit von mindestens 2500 l/m²sec aufweist,
   dadurch gekennzeichnet, dass die die Filterschicht (Schicht 2) bildenden Glasfasern
   b4) eine Mischung von mindestens zwei Glasfaser-Typen umfasst,
   b5) die erste Glasfaser-Type der Mischung gemäß b4) einen Durchmesser bestimmt als Mittelwert aus einer Normalverteilung gemäß Gauß von 0,6µm ±0,3µm aufweist und
   b6) die zweite Glasfaser-Type der Mischung gemäß b4) einen Durchmesser bestimmt als Mittelwert aus einer Normalverteilung gemäß Gauß von 1,0µm ±0,3µm aufweist und
   b7) die erste und zweite Glasfaser-Type der Mischung gemäß b4) in einem Verhältnis im Bereich 1 zu 1.1 bis 1 zu 4 (Gewicht) vorliegen.

### Stützschicht (Schicht 3) und Deckschicht (Schicht 1)

Als textile Stützschicht bzw. textile Deckschicht kommen Vliese, Gewebe, Gelege, Gewirke und Gestricke zum Einsatz, bevorzugt werden aufgrund der technischen Verfügbarkeit Vliese verwendet.

Bei der erfindungsgemäß eingesetzten textilen Stützschicht handelt es sich vorzugsweise um eine Stützvliesschicht aus synthetischen, polymeren Fasern, Glasfasern oder Gemische derselben, welche plissierfähig ist.

Bei der erfindungsgemäß eingesetzten textilen Deckschicht handelt es sich vorzugsweise um eine Deckvliesschicht aus synthetischen, polymeren Fasern, welche plissierfähig ist. Bevorzugt wird die textile Deckschicht, insbesondere die Deckvliesschicht aus verschiedenen synthetischen, polymeren Fasern. Des Weiteren kann die textile Deckschicht, insbesondere die Deckvliesschicht, auch mehrlagig aufgebaut sein. Hierbei können die einzelnen Lagen sich hinsichtlich der gewählten verschiedenen synthetischen, polymeren Fasern unterscheiden und/oder verschiedene Faserdurchmesser aufweisen.

Bei den Vliesen handelt es sich um Naßvliesstoffe, Spinnvliesstoffe oder trockengelegte Vliesstoffe, die mittels chemischer Bindung, sowie ggf. thermischer und/oder mechanischer Verfestigung verfestigt sind. Bei den Vliesen handelt es sich um Stapelfaservliese und/oder Spinnvliesstoffe.

Die bevorzugten Ausführungsformen für die nachfolgend bezeichneten Spinnvliesstoffe gelten auch für Stapelfaservliese.

Spinnvliesstoffe, d.h. sogenannte Spunbonds, werden durch eine Wirrablage von frisch schmelzgesponnenen Filamenten erzeugt. Die Filamente sind Endlos-Synthesefasern aus schmelzspinnbaren Polymermaterialien.

Geeignete Polymermaterialien sind beispielsweise Thermoplaste, vorzugsweise Polyamide, wie z.B. Polyhexamethylen-diadipamid, Polycaprolactam, aromatische oder teilaromatische Polyamide ("Aramide"), aliphatische Polyamide, wie z.B. Nylon, teilaromatische oder vollaromatische Polyester, Polycarbonate (PC), Polyphenylensulfid (PPS), Polyphenylenoxid (PPO), Polystyrol (PS), Polyvinylcarbazol (PVK), Polyacetal (POM), Polyarylether, Polyarylsulfon, Polyethersulfon, Polymere mit Ether- und Keto-gruppen, wie z.B. Polyetherketone (PEK) und Poly-etheretherketon (PEEK), Polyolefine, wie z.B. Polyethylen oder Polypropylen, oder Polybenzimidazole. Besonders bevorzugt sind Polyester, Polyolefine, wie z.B. Polyethylen oder Polypropylen, oder aromatische oder teilaromatische Polyamide ("Aramide"), aliphatische Polyamide, wie z.B. Nylon.

Bevorzugt umfassen bzw. bestehen die Spinnvliese aus schmelzspinnbaren Polyestern. Als Polyestermaterial kommen im Prinzip alle zur Faserherstellung geeigneten bekannten Typen in Betracht. Derartige Polyester bestehen überwiegend aus Bausteinen, die sich von aromatischen Dicarbonsäuren und von aliphatischen Diolen ableiten. Gängige aromatische Dicarbonsäurebausteine sind die zweiwertigen Reste von Benzoldicarbonsäuren, insbesondere der Terephthalsäure und der Isophthalsäure; gängige Diole haben 2 bis 4 C-Atome, wobei das Ethylenglycol besonders geeignet ist. Besonders vorteilhaft sind Spinnvliese, die zu mindestens 85 mol % aus Polyethylenterephthalat bestehen. Die restlichen 15 mol % bauen sich dann aus Dicarbonsäureeinheiten und Glycoleinheiten auf, die als sogenannte Modifizierungsmittel wirken und die es dem Fachmann gestatten, die physikalischen und chemischen Eigenschaften der hergestellten Filamente gezielt zu beeinflussen. Beispiele für solche Dicarbonsäureeinheiten sind Reste der Isophthalsäure oder von aliphatischen Dicarbonsäure wie z.B. Glutarsäure, Adipinsäure, Sebazinsäure; Beispiele für modifizierend wirkende Diolreste sind solche von längerkettigen Diolen, z. B. von Propandiol oder Butandiol von Di- oder Triethylenglycol oder, sofern in geringer Menge vorhanden, von Polyglycol mit einem Molgewicht von ca. 500 bis 2000.

Besonders bevorzugt sind Polyester, die mindestens 95 mol % Polyethylenterephthalat (PET) enthalten, insbesondere solche aus unmodifiziertem PET.

Die in den Spinnvliesen enthaltenen Polyester haben vorzugsweise ein Molekulargewicht entsprechend einer intrinsischen Viskosität (IV), gemessen in einer Lösung von 1 g Polymer in 100 ml Dichloressigsäure bei 25 °C, von 0,6 bis 1,4.

In einer weiteren Ausführungsform der Erfindung kann das Vlies, insbesondere das Spinnvlies, auch ein schmelzbinderverfestigter Vliesstoff sein, d.h. die Verfestigung erfolgt mittels eines thermoplastischen Binders der vorzugsweise in Faserform vorliegt. Der schmelzbinderverfestigte Vliesstoff umfasst somit Träger- und Schmelzklebefasern. Die Träger- und Schmelzklebefasern können sich von beliebigen thermoplastischen fadenbildenden Polymeren ableiten Trägerfasern können sich darüber hinaus auch von nicht schmelzenden fadenbildenden Polymeren ableiten. Derartige schmelzbinderverfestigte Spinnvliese sind beispielsweise grundsätzlich in EP-A-0,446,822 und EP-A-0,590,629 beschrieben.

Beispiele für Polymere, von denen sich die Trägerfasern ableiten können, sind Polyacrylnitril, Polyolefine, wie Polyethylen oder Polypropylen, im wesentlichen aliphatische Polyamide, wie Nylon 6.6, im wesentlichen aromatische Polyamide (Aramide), wie Poly-(p-phenylenterephthalat) oder Copolymere enthaltend einen Anteil an aromatischen m-Diamineinheiten zur Verbesserung der Löslichkeit oder Poly-(m-phenylenisophthalat), im wesentlichen aromatische Polyester, wie Poly-(p-hydroxybenzoat) oder vorzugsweise im wesentlichen aliphatische Polyester, wie Polyethylenterephthalat

Der Anteil der beiden Fasertypen zueinander kann in weiten Grenzen gewählt werden, wobei darauf zu achten ist, dass der Anteil der Schmelzklebefasern so hoch gewählt wird, dass der Vliesstoff durch Verklebung der Trägerfasern mit den Schmelzklebefasern eine für die gewünschte Anwendung ausreichende Festigkeit erhält aber andererseits die benötigte Luftdurchlässigkeit gewährleistet ist. Der Anteil des aus der Schmelzklebefaser stammenden Schmelzklebers im Vliesstoff beträgt üblicherweise weniger als 50 Gew.-% (bezogen auf das Gewicht des Vliesstoffes).

Als Schmelzkleber kommen insbesondere modifizierte Polyester mit einem gegenüber dem Vliesstoff-Rohstoff um 10 bis 50 °C, vorzugsweise 30 bis 50 °C abgesenkten Schmelzpunkt in Betracht. Beispiele für einen derartigen Schmelzkleber sind Polypropylen, Polybutylenterephthalat oder durch Einkondensieren längerkettiger Diole und/oder von Isophthalsäure oder aliphatischen Dicarbonsäuren modifiziertes Polyethylenterephthalat.

Die Schmelzkleber werden vorzugsweise in Faserform in die Vliese eingebracht.

Vorzugsweise sind Träger- und Schmelzklebefasern aus einer Polymerklasse aufgebaut. Darunter ist zu verstehen, dass alle eingesetzten Fasern aus einer Substanzklasse so ausgewählt werden, dass diese nach Gebrauch des Vlieses problemlos recycliert werden können. Bestehen die Trägerfasern beispielsweise aus Polyester, so werden die Schmelzklebefasern ebenfalls aus Polyester oder aus einer Mischung von Polyestern, z. B. als Bikomponentenfaser mit PET im Kern und einen niedriger schmelzenden Polyethylenterephthalat-Copolymeren als Mantel ausgewählt. Darüber hinaus sind jedoch auch Bikomponentenfasern möglich, die aus unterschiedlichen Polymeren aufgebaut sind. Beispiele hierfür sind Bikomponentenfasern aus Polyester und Polyamid (Kern/Hülle).

Die Einzelfasertiter der Träger- und der Schmelzklebefasern können innerhalb der genannten Grenzen gewählt werden.

Die die Vliesstoffe aufbauenden Filamente oder Stapelfasern können einen praktisch runden Querschnitt besitzen oder auch andere Formen aufweisen, wie hantel-, nierenförmige, dreieckige bzw. tri- oder multilobale Querschnitte. Es sind auch Hohlfasern und Bi- oder Mehrkomponentenfasern einsetzbar. Ferner lässt sich die Schmelzklebefaser auch in Form von Bi- oder Mehrkomponentenfasern einsetzen.

Die das Vlies bildenden Fasern können durch übliche Zusätze modifiziert sein, beispielsweise durch Antistatika, wie Ruß oder Zusätze welche eine elektrostatische Aufladung ermöglichen. Des Weiteren können die Fasern eine antimikrobielle Ausrüstung aufweisen.

Neben den genannten synthetischen, polymeren Fasern sind auch Glasfasern oder Gemische aus Glasfasern und synthetischen, polymeren Fasern als Vliesbildende Fasern geeignet.

Anstelle der Glasfasern können auch Mineralfasern auf Basis von Alumosilikat-, Keramik-, Dolomitfasern oder Fasern von Vulkaniten wie z.B. Basalt Diabas-, Melaphyr. Diabase (Grünstein) und Melaphyre (sogenannte Paläobasalte) eingesetzt werden. Bevorzugt sind jedoch aufgrund ihrer wirtschaftlichen Verfügbarkeit Glasfasern.

Bei den Glasfasern unterliegen die eingesetzten Glasfasern hinsichtlich des Glastyps keiner wesentlichen Einschränkung, so dass grundsätzlich alle Glastypen wie E-Glas, S-Glas, R-Glas, C-Glas eingesetzt werden können. Aus wirtschaftlichen Gründen wird E-Glas oder C-Glas bevorzugt. Besonders bevorzugt sind biolösliche Gläser.

Die Glasfasern können aus Filamenten, d.h. unendlich langen Fasern oder aus Stapelfasern gebildet werden. Die durchschnittliche Länge der Stapelfasern beträgt vorzugsweise zwischen 3 und 100 mm, insbesondere zwischen 6 bis 18 mm.

Im Falle des Stützvlieses kann dieses vorzugsweise auch nur aus Glasfasern aufgebaut sein. Derartige Glasfaser-Stützvliese werden ebenfalls aus den vorstehend beschriebenen Glasfasern aufgebaut. Die Vliese können mit Hilfe bekannter Naß- oder Trockenlegeverfahren hergestellt werden.

Das Flächengewicht der textilen Stützschicht, vorzugsweise der Stützvliesschicht, beträgt zwischen 10 und 300 g/m², vorzugsweise 20 und 250 g/m², insbesondere 20 und 100 g/m². Insofern die textile Stützschicht, vorzugsweise die Stützvliesschicht, auch Glasfasern umfasst, so beträgt das Flächengewicht zwischen 25 und 300 g/m², vorzugsweise 35 und 110 g/m².

Die Mischungsverhältnisse Polymer/Glas variieren in breiten Bereichen und betragen jeweils 0 - 100 Gew.-%, vorzugsweise besteht die textile Stützschicht, vorzugsweise die Stützvliesschicht, aus 100% Glas. Der Durchmesser der Glasfasern liegt zwischen 0,5 - 15 µm, vorzugsweise 8 bis 15 µm. Besonders bevorzugt besteht die Stützvliesschicht aus Glasfasern.

Das Flächengewicht der textilen Deckschicht, vorzugsweise der Deckvliesschicht, beträgt zwischen 20 und 100 g/m², vorzugsweise 25 und 55 g/m², insbesondere 30 und 45 g/m².

Je nach Anwendungsprofil der Filter, werden die Stützvliese bzw. Deckvliese bildenden Spinnvliese nach ihrer Herstellung neben der chemischen Verfestigung auch einer hydrodynamischen Verfestigung und/oder thermischen Verfestigung unterworfen.

Hierzu werden die schmelzbinderverfestigbaren Spinnvliese, die neben Trägerfasern auch Bindefasern enthalten, in an sich bekannter Weise mit einem Kalander oder in einem Ofen thermisch verfestigt Die Fasern können auch eine Bi-Komponenten-Struktur (z.B. Kern/Mantel) aufweisen, bei der der Mantel das Bindepolymer ist.

Enthalten die Spinnvliese keine zur thermischen Verfestigung befähigten Bindefasern, so werden diese Spinnvliese mit einem chemischen Binder imprägniert. Hierzu kommen insbesondere Binder auf Basis von Acrylaten oder Styrolen in Frage. Der Binderanteil beträgt zweckmäßigerweise bis zu 25 Gew.-%, vorzugsweise 5 bis 25 Gew.-%. Die genaue Wahl des Binders erfolgt nach der speziellen Interessenlage des Weitenverarbeiters.

In einer weiteren Ausführungsform können auch flammhemmend modifizierte Binder verwendet werden oder sogar ganz auf Binder verzichtet werden.

In einer weiteren Ausführungsform der Erfindung weist das Stützvlies bzw. das Deckvlies ein Prägemuster aus statistisch verteilten oder rapportmäßig angeordneten, kleinflächigen Einprägungen, vorzugsweise eine Punktprägung, auf, bei der die Preßfläche, d.h. die Gesamtheit aller dünnen verdichteten Stellen des Spinnvlieses 5 bis 30 %, vorzugsweise 8 bis 20 % seiner Gesamtfläche ausmachen. Dieses Prägemuster kann im Fall der schmelzbinderverfestigten Spinnvliese vorteilhafterweise bei der Kalander-Verfestigung aufgebracht werden. Wird das Stützvlies durch einen chemischen Binder endverfestigt kann das Prägemuster ebenfalls mittels eines Kalanders aufgeprägt werden. Dieses Prägemuster, das beim Durchlaufen des Spinnvlieses durch einen beheizten Kalander auf beide Oberflächen des Spinnvlieses, vorzugsweise aber nur auf eine Oberfläche des Spinnvlieses aufgebracht wird, weist eine Vielzahl kleiner Einprägungen auf, die eine Größe von 0,2 bis 4 mm², vorzugsweise 0,5 bis 2 mm², haben und durch dazwischen liegende, etwa gleich große, nicht geprägte Flächenelemente des Vlieses voneinander getrennt sind. Die Bestimmung der Fläche der verdichteten Stellen des Vlieses und der nicht verdichteten Stellen des Vlieses kann beispielsweise mittels mikroskopischer Querschnittsaufnahmen erfolgen.

In einer bevorzugten Ausführungsform ist das Stützvlies und das Deckvlies ohne Vernadelung und nur durch Zusatz von chemischen Bindern verfestigt worden.

Insofern das Stützvlies bzw. das Deckvlies aus mindestens 2 unterschiedlichen Vliesen gebildet wird, werden diese vorzugsweise durch mechanische und/oder hydrodynamische Vernadelung mit einander verbunden. Neben dieser Methode kann die Laminierung der verschiedenen Vlieslagen auch mittels Kalander erfolgen.

In einer bevorzugten Ausführungsform der Erfindung besteht die Stützvliesschicht, insbesondere jedoch die Deckvliesschicht aus 2 bis 6 Vlieslagen, wobei das eingangs genannte Gesamtflächengewicht beibehalten wird. Insofern die Deckvliesschicht einen mehrlagigen Aufbau besitzt sind mindestens 2 der Vlieslagen, vorzugsweise mindestens 3 der Vlieslagen, unterschiedlich.

Die Einzeltiter der Fasern aus synthetischen Polymeren, welche das Stützvlies bilden, betragen zwischen 2 und 25 dtex, vorzugsweise zwischen 2 und 17 dtex.

Die Einzeltiter der Fasern aus synthetischen Polymeren, welche das Deckvlies bilden, betragen zwischen 2 und 25 dtex, bevorzugt zwischen 2 und 17dtex, besonders bevorzugt zwischen 2 und 10 dtex.

Das im erfindungsgemäßen Filter vorhandene Stützvlies besitzt eine Luftdurchlässigkeit von mindestens 750 l/m² sec. Bevorzugt besitzt das Stützvlies eine Luftdurchlässigkeit zwischen 7.000 und 11.000 l/m² sec, gemessen jeweils gemäß DIN EN ISO 9237.

Die im erfindungsgemäßen Filter vorhandene Deckvliesschicht besitzt eine Luftdurchlässigkeit von mindestens 2500 l/m² sec, vorzugsweise eine Luftdurchlässigkeit von mehr als 8500 l/m² sec, gemessen gemäß DIN EN ISO 9237.

Die Deckschicht zeigt ein Abscheideverhalten entsprechend der Klasse G1 bis G4 (Einstufung gemäß EN 779)

### Filterschicht (Schicht 2)

Die auf der textilen Stützschicht aufgebrachte Filterschicht besteht üblicherweise aus Glasfasern. Anstelle der Glasfasern können auch Mineralfasern auf Basis von Alumosilikat-, Keramik-, Dolomitfasern oder Fasern von Vulkaniten wie z.B. Basalt Diabas-, Melaphyr. Diabase (Grünstein) und Melaphyre (sogenannte Paläobasalte) eingesetzt werden. Glasfasern werden aufgrund ihrer wirtschaftlichen Verfügbarkeit eingesetzt.

Bei den erfindungsgemäß eingesetzten Glasfaservliesen unterliegen die eingesetzten Glasfasern hinsichtlich des Glastyps keiner wesentlichen Einschränkung, so dass grundsätzlich alle Glastypen wie E-Glas, S-Glas, R-Glas, C-Glas eingesetzt werden können. Aus wirtschaftlichen Gründen wird E-Glas oder C-Glas bevorzugt. Besonders bevorzugt sind biolösliche Gläser.

Die die Filterschicht (Schicht 2) bildenden Glasfaservliese werden mittels bekannter Trockenlegeverfahren hergestellt. Für den Fachmann sind trocken- und nassgelegte Glasfaservliese mittels mikroskopischer Verfahren unterscheidbar. Besonders bevorzugt wird das die Filterschicht (Schicht 2) bildende Glasfaservlies mit Hilfe des Air Media - Verfahrens hergestellt (Pot and Marble Verfahren, siehe US5993501), welches auch unter der Bezeichnung "flame attenuation fiberization" Prozess dem Fachmann bekannt ist, bei dem durch horizontal angeordnete Brennerdüsen die sich vertikal nach unten bewegenden Glasfasern weiter aufgeschmolzen und zu feinen Glasfäden gezogen und abgelegt werden. Die Feinheit der abgelegten Glasfasern wird Mittels der Brenner-Parametern (z.B. Temperatur, Ausströmgeschwindigkeit, Druck, Brennstoff/O2 - Verhältnis) eingestellt und ist dem Fachmann auf diesem Gebiet bekannt. Mit Hilfe des Air Media - Verfahrens sind Vliese herstellbar, die mittels Nasslegeverfahren nicht zugänglich sind.

Die unterschiedlichen Faserdurchmesser im Filtermedium werden mittels unterschiedlichen Prozessparametern der Brenner erzeugt. Aufgrund des ausreichenden Abstands zwischen Brenner und Ablage erfolgt eine Durchmischung der sich im Fluge befindlichen Glasfasern und damit eine weitestgehend homogene Verteilung im Filter.

Die die Filterschicht (Schicht 2) bildenden Glasfaservliese umfassen eine Mischung von mindestens zwei Glasfaser-Typen, wobei die erste Glasfaser-Type der Mischung einen Durchmesser bestimmt als Mittelwert aus einer Normalverteilung gemäß Gauß von 0,6µm ±0,3µm, vorzugsweise ±0,2µm, aufweist und die zweite Glasfaser-Type der Mischung einen Durchmesser bestimmt als Mittelwert aus einer Normalverteilung gemäß Gauß von 1,0µm ±0,3µm, vorzugsweise ±0,2µm, aufweist und die erste und zweite Glasfaser-Type der Mischung in einem Gewichtsverhältnis im Bereich 1 zu 1.1 bis 1 zu 4, vorzugsweise 1 zu 1.5 bis 1 zu 3, insbesondere bevorzugt 1 zu 2, vorliegen. Vorzugsweise beträgt der Abstand zwischen dem vorstehend genannten Mittelwert der ersten Glasfaser-Type und dem vorstehend genannten Mittelwert der zweiten Glasfaser-Type mindestens 0,3µm, besonders bevorzugt mindestens 0,4µm.

In einer bevorzugten Ausführungsform bilden die erste und zweite Glasfaser-Type der Mischung min. 80 Gew% der Fasern in der Filterschicht (Schicht 2), besonders bevorzugt bilden die erste und zweite Glasfaser-Type der Mischung min. 98 Gew% der Fasern in der Filterschicht (Schicht 2), insbesondere bilden die erste und zweite Glasfaser-Type der Mischung 100 Gew% der Fasern in der Filterschicht (Schicht 2).

Das die Filterschicht (Schicht 2) bildende Glasfaservlies wird während oder nach der Bildung mittel Trockenlegeverfahren (Air Media-Verfahren) üblicherweise mit chemischem Binder beaufschlagt.

Das die Filterschicht (Schicht 2) bildende Glasfaservlies umfasst vorzugsweise Fasern mit einer durchschnittlichen Länge zwischen 0,3 und 100 mm

Das die Filterschicht (Schicht 2) bildende Glasfaservlies enthält vorzugsweise zwischen 5 und 30 Gew.-% an chemischen Bindern, bezogen auf das Gesamtgewicht der Filterschicht nach Trocknung.

Das die Filterschicht (Schicht 2) bildende Glasfaservlies hat ein Flächengewicht zwischen 25 und 300 g/m², vorzugsweise 30 und 80 g/m².

Das die Filterschicht (Schicht 2) bildende Glasfaservlies hat vorzugsweise eine Dicke zwischen 1 bis 20 mm, insbesondere zwischen 4 und 7 mm.

Das die Filterschicht (Schicht 2) bildende Glasfaservlies besitzt eine Luftdurchlässigkeit von mindestens 2500 l/m² sec, vorzugsweise eine Luftdurchlässigkeit von mehr als 8500 l/m² sec, gemessen gemäß DIN EN ISO 9237.

Das Glasfaservlies zeigt ein Abscheideverhalten entsprechend der Klasse F7 bis F9 (Einstufung gemäß EN 779)
Das Glasfaservlies zeigt ein Abscheideverhalten entsprechend der Klasse M5 bis M6 (Einstufung gemäß EN 779)

Die Herstellung des erfindungsgemäßen Filters erfolgt mittels bekannter, dem Fachmann zugänglicher, Verfahren. Geeignete Verfahren sind beispielsweise in US-A-5993501 aufgezeigt, die Bildung von Spinnvliesen gehört ebenfalls zum Standardwissen des Fachmanns.

Die Herstellung des Filters erfolgt durch Bildung der textilen Stützschicht (Schicht 3) oder Zuführen der bereits gebildeten textilen Stützschicht (Schicht 3). Die textile Stützschicht liegt vorzugsweise als Rollenware vor. Anschließend wird auf dieser textilen Stützschicht die Filterschicht (Schicht 2) mittels Air-Media-Verfahren als trockengelegtes Vlies aufgebracht. Dies erfolgt üblicherweise direkt auf der textilen Stützschicht (Schicht 3) mittels des besagten Air Media Verfahren. Hierbei wird zeitgleich mit den Glasfasern ein chemischer Binder aufgebracht, üblicherweise durch Sprühverfahren.

Vorzugsweise wird der aufgebrachte chemische Binder zumindest teilweise gehärtet, so dass eine Verfestigung bewirkt wird. Anschließend kann die mit der Filterschicht (Schicht 2) beaufschlagte textile Stützschicht (Schicht 3) aufgewickelt oder weiterverarbeitet werden.

Die bevorzugten Bereiche für die beteiligten Materialen sind bereits Eingangs genannt worden und gelten auch für das Verfahren gleichermaßen.

Zum Aufbringen der textilen Deckschicht (Schicht 1) kann die mit der Filterschicht (Schicht 2) beaufschlagte textile Stützschicht (Schicht 3) abgewickelt und unmittelbar bei der Herstellung der Deckschicht (Schicht 1) zugeführt werden. Anschließend kann der mit der Deckschicht (Schicht 1) versehene Verbund aus Filterschicht (Schicht 2) und textiler Stützschicht (Schicht 3) aufgewickelt oder weiterverarbeitet werden.

Alternativ erfolgt die Herstellung des Filters durch Bildung der textilen Deckschicht (Schicht 1) oder Zuführen der bereits gebildeten textilen Deckschicht (Schicht 1). Die textile Deckschicht liegt vorzugsweise als Rollenware vor. Anschließend wird auf dieser textilen Deckschicht die Filterschicht (Schicht 2) mittels Air-Media-Verfahren als trockengelegtes Vlies aufgebracht. Dies erfolgt üblicherweise direkt auf der textilen Deckschicht (Schicht 1) mittels des besagten Air Media Verfahren. Hierbei wird zeitgleich mit den Glasfasern ein chemischer Binder aufgebracht, üblicherweise durch Sprühverfahren.

Vorzugsweise wird der aufgebrachte chemische Binder zumindest teilweise gehärtet, so dass eine Verfestigung bewirkt wird. Anschließend kann die mit der Filterschicht (Schicht 2) beaufschlagte textile Deckschicht (Schicht 1) aufgewickelt oder weiterverarbeitet werden.

Die bevorzugten Bereiche für die beteiligten Materialen sind bereits Eingangs genannt worden und gelten auch für das Verfahren gleichermaßen.

Zum Aufbringen der textilen Stützschicht (Schicht 3) kann die mit der Filterschicht (Schicht 2) beaufschlagte textile Deckschicht (Schicht 1) abgewickelt und unmittelbar bei der Herstellung der Stützschicht (Schicht 3) zugeführt werden.
Anschließend kann der mit der Deckschicht (Schicht 1) versehene Verbund aus Filterschicht (Schicht 2) und textiler Stützschicht (Schicht 3) aufgewickelt oder weiterverarbeitet werden.

Die bevorzugten Bereiche für die beteiligten Materialen sind bereit Eingangs genannt worden und gelten auch für das Verfahren gleichermaßen.

Der gesamte Verbund aus Stützschicht (Schicht 3), Filterschicht (Schicht 2) und textiler Deckschicht (Schicht 1) wird zur Feinjustierung und Endverfestigung in einem Kalanderofen bzw. Kalandertrockner verbunden, wobei der chemische Binder vollständig ausgehärtet wird.

Die erfindungsgemäßen Filter werden in der Luft/Gas- und Flüssigkeitsfiltration, insbesondere im Automobilsektor, in Klimaanlagen, Innenraumfiltern, Pollenfiltern, Reinraumfiltern, Haushaltsfiltern, sowie als Ölfilter und Hydraulikfilter eingesetzt.

Die erfindungsgemäßen Filter aus Stützschicht (Schicht 3), Filterschicht (Schicht 2) und textiler Deckschicht (Schicht 1) besitzt eine Luftdurchlässigkeit von mindestens [500 l/m² sec, vorzugsweise eine Luftdurchlässigkeit von mehr als 1500 l/m² sec, gemessen gemäß DIN EN ISO 9237.]

Die erfindungsgemäßen Filter erfüllen die Energieeffizienzklasse A+ gemäß EUROVENT 01/2015.

Gegenstand der vorliegenden Erfindung sind somit auch Filtermodule bzw. Kartuschen, die den erfindungsgemäßen Filter enthalten. Hierbei werden die Filter in plissierter Form in Gehäuse oder andere Ummantellungen eingebaut. Entsprechende Ausgestaltungen sind US-A-5883501 zu entnehmen.

Weitere Einsatzgebiete der erfindungsgemäßen Filter sind Isolations- und Schallabsorptionspanelen

### Messmethoden:

DIN/EN779
ASHRAE 52.2
EUROVENT 01/2015

### Energieeffizienzklasse A+

| | |
|---|---|
| Luftdurchlässigkeit: | Die Bestimmung der Luftdurchlässigkeit erfolgt gemäß DIN EN ISO 9237:1995-12 |
| Flächengewicht: | Die Bestimmung des Flächengewichtes erfolgt gemäß DIN EN ISO 29073-1:1992-08. |
| Faserdurchmesser: | Die Bestimmung des Faserdurchmessers erfolgt mikroskopisch. |

## Patentansprüche

1. Filter aus einem mehrlagigen Filtermedium umfassend:
a) mindestens eine textile Stützschicht (Schicht 3), vorzugsweise eine Vliesschicht, aus synthetischen, polymeren Fasern, Glasfasern oder Gemische derselben wobei
a1) die textile Stützschicht, vorzugsweise das Vlies, ein Flächengewicht von 10 bis 300 g/m² aufweist,
a2) die Fasern der textilen Stützschicht, vorzugsweise des Vlieses, einen Durchmesser im Bereich 2 bis 25 dtex für polymere Fasern bzw. einen Durchmesser von 0,5 - 15µm für Glasfasern aufweisen,
a3) die textile Stützschicht, vorzugsweise das Vlies, durch chemische Binder oder durch thermoplastische Binder verfestigt ist,
a4) die textile Stützschicht, vorzugsweise das Vlies, eine Luftdurchlässigkeit von mindestens 750 l/m²sec aufweist,
b) mindestens eine Filterschicht (Schicht 2), die auf mindestens einer Seite des Stützvlieses angebracht ist, wobei die Filterschicht aus Glasfasern aufgebaut wird und
b1) die Filterschicht aus Glasfasern ein Vlies ist, dessen Flächengewicht zwischen 25 und 300 g/m² beträgt,
b2) das Glasfaservlies durch chemische Binder verfestigt,
b3) die Auftragsmenge des chemischen Binders 5 bis 30 Gew.-% bezogen auf das Flächengewicht der Filterschicht (Schicht 2) beträgt,
c) mindestens eine textile Deckschicht (Schicht 1) die auf der Filterschicht gemäß b) aufgebracht wird, wobei die Deckschicht aus synthetischen, polymeren Fasern aufgebaut wird und
c1) die textile Deckschicht, vorzugsweise das Vlies, ein Flächengewicht von 20 bis 100 g/m² aufweist,
c2) die Fasern der textilen Deckschicht, vorzugsweise des Vlieses, einen Durchmesser im Bereich 2 bis 25 dtex aufweisen,
c3) die textile Deckschicht, vorzugsweise das Vlies, durch chemische Binder oder durch thermoplastische Binder verfestigt ist,
c4) die Auftragsmenge des chemischen Binders bzw. des thermoplastischen Binders 5 bis 25 Gew.-% bezogen auf das Flächengewicht der Deckschicht (Schicht 1) beträgt,
c5) die textile Deckschicht, vorzugsweise das Vlies Luftdurchlässigkeit von mindestens 2500 l/m²sec aufweist,
**dadurch gekennzeichnet, dass** die die Filterschicht (Schicht 2) bildenden Glasfasern
b4) eine Mischung von mindestens zwei Glasfaser-Typen umfasst,
b5) die erste Glasfaser-Type der Mischung gemäß b4) einen Durchmesser bestimmt als Mittelwert aus einer Normalverteilung gemäß Gauß von 0,6µm ±0,3µm, vorzugsweise ±0,2µm, aufweist und
b6) die zweite Glasfaser-Type der Mischung gemäß b4) einen Durchmesser bestimmt als Mittelwert aus einer Normalverteilung gemäß Gauß von 1,0µm ±0,3µm, vorzugsweise ±0,2µm, aufweist und
b7) die erste und zweite Glasfaser-Type der Mischung gemäß b4) in einem Gewichtsverhältnis im Bereich 1 zu 1.1 bis 1 zu 4, vorzugsweise 1 zu 1.5 bis 1 zu 3, insbesondere bevorzugt 1 zu 2, vorliegen.

2. Filter gemäß Anspruch 1, **dadurch gekennzeichnet, dass** die textile Stützschicht plissierfähig ist.

3. Filter gemäß Anspruch 1 oder 2, **dadurch gekennzeichnet, dass** die textile Stützschicht und/oder die textile Deckschicht unabhängig voneinander ein Naßvliesstoff, Spinnvliesstoff oder trockengelegter Vliesstoff ist.

4. Filter gemäß Anspruch 3, **dadurch gekennzeichnet, dass** die textile Stützschicht und/oder die textile Deckschicht Stapelfaservliese und/oder Spinnvliesstoffe umfasst.

5. Filter gemäß einem oder mehreren der Ansprüche 1 bis 4, **dadurch gekennzeichnet, dass** die textile Stützschicht und/oder die textile Deckschicht aus Thermoplasten, insbesondere Polyester und/oder Polyolefine, gebildet wird.

6. Filter gemäß einem oder mehreren der Ansprüche 1 bis 5, **dadurch gekennzeichnet, dass** die textile Stützschicht ein Flächengewicht zwischen 20 und 250 g/m² aufweist, vorzugsweise 20 und 100 g/m².

7. Filter gemäß einem oder mehreren der Ansprüche 1 bis 6, **dadurch gekennzeichnet, dass** die Fasern der textilen Stützschicht, vorzugsweise des Vlieses, einen Durchmesser im Bereich 2 bis 17 dtex für polymere Fasern bzw. 0,5 - 15 µm, vorzugsweise 8 bis 15 µm für Glasfasern aufweisen.

8. Filter gemäß einem oder mehreren der Ansprüche 1 bis 7, **dadurch gekennzeichnet, dass** die textile Deckschicht, vorzugsweise das Vlies, ein Flächengewicht von 25 bis 55 g/m² aufweist

9. Filter gemäß einem oder mehreren der Ansprüche 1 bis 8, **dadurch gekennzeichnet, dass** die Fasern der textilen Deckschicht, vorzugsweise des Vlieses, einen Durchmesser im Bereich 2 bis 17 dtex, bevorzugt 2 bis 10 dtex, aufweisen.

10. Filter gemäß einem oder mehreren der Ansprüche 1 bis 9, **dadurch gekennzeichnet, dass** die erste und zweite Glasfaser-Type der Mischung min. 80 Gew.-% der Fasern in der Filterschicht (Schicht 2) bilden, bevorzugt bilden die erste und zweite Glasfaser-Type der Mischung min. 98 Gew.-% der Fasern in der Filterschicht (Schicht 2), insbesondere bilden die erste und zweite Glasfaser-Type der Mischung 100 Gew.-% der Fasern in der Filterschicht (Schicht 2).

11. Filter gemäß einem oder mehreren der Ansprüche 1 bis 10, **dadurch gekennzeichnet, dass** der Abstand zwischen dem Mittelwert der ersten Glasfaser-Type und dem Mittelwert der zweiten Glasfaser-Type in der Filterschicht (Schicht 2) mindestens 0,3µm, besonders bevorzugt mindestens 0,4µm, beträgt.

12. Filter gemäß einem oder mehreren der Ansprüche 1 bis 11, **dadurch gekennzeichnet, dass** die Filterschicht (Schicht 2) ein trockengelegtes Vlies ist.

13. Filter gemäß Anspruch 12, **dadurch gekennzeichnet, dass** das trockengelegte Vlies mittels Air Media -Verfahrens hergestellt wurde.

14. Filter gemäß einem oder mehreren der Ansprüche 1 bis 13, **dadurch gekennzeichnet, dass** die Fasern der Filterschicht (Schicht 2) ausschließlich Mineral- und/oder Glasfasern, vorzugsweise Glasfasern, sind.

15. Verfahren zur Herstellung des Filters gemäß Anspruch 1 umfassend die Schritte:
a) Bildung der textilen Stützschicht (Schicht 3) oder Zuführen der bereits gebildeten textilen Stützschicht (Schicht 3) in Form einer Rollenware,
b) Bildung der Filterschicht (Schicht 2) direkt auf der textilen Stützschicht (Schicht 3)
c) Gegebenenfalls aufrollen des gemäß Schritt b) erhaltenen Materials und abrollen zur Durchführung von Schritt d),
d) Bildung der textile Deckschicht (Schicht 1) oder Zuführen der bereits gebildeten textile Deckschicht (Schicht 1)
oder
A) Bildung der textilen Deckschicht (Schicht 1) oder Zuführen der bereits gebildeten textilen Deckschicht (Schicht 1) in Form einer Rollenware,
B) Bildung der Filterschicht (Schicht 2) direkt auf der textilen Deckschicht (Schicht 1)
C) Gegebenenfalls aufrollen des gemäß Schritt b. erhaltenen Materials und abrollen zur Durchführung von Schritt d.,
D) Bildung der textile Stützschicht (Schicht 3) oder Zuführen der bereits gebildeten textile Stützschicht (Schicht 3)
e) Kalandrierung des gemäß Schritt d) oder Schritt D) erhaltenen Materials.

16. Verfahren gemäß Anspruch 15, **dadurch gekennzeichnet, dass** die Filterschicht (Schicht 2) mittels Air Media Verfahren erzeugte Glasfasern sind.

17. Verwendung der Filter definiert in den Ansprüchen 1 bis 14 in der Luft/Gas- und Flüssigkeitsfiltration, vorzugsweise zur Filtration von Luftströmen in Zuluft und/oder Wärmetauscher-Systemen.

18. Filtermodule enthaltend ein Gehäuse und mindestens einen Filter definiert in den Ansprüchen 1 bis 14.

## Claims

1. A filter formed from a multilayer filter medium, comprising:
a) at least one textile supporting layer (layer 3), preferably a nonwoven layer, formed from synthetic polymer fibres, glass fibres or mixtures thereof, wherein
a1) the textile supporting layer, preferably the nonwoven, has a basis weight of 10 to 300 g/m²,
a2) the fibres of the textile supporting layer, preferably of the nonwoven, have a diameter in the range 2 to 25 dtex for polymer fibres or a diameter of 0.5 - 15 µm for glass fibres,
a3) the textile supporting layer, preferably the nonwoven, is consolidated by chemical binders or by thermoplastic binders,
a4) the textile supporting layer, preferably the nonwoven, has an air permeability of at least 750 L/m²sec,
b) at least one filter layer (layer 2), which is applied to at least one side of the supporting nonwoven, wherein the filter layer is constructed from glass fibres, and
b1) the filter layer formed from glass fibres is a nonwoven, the basis weight of which is between 25 and 300 g/m²,
b2) the glass fibre nonwoven is consolidated by chemical binders,
b3) the quantity of chemical binder which is applied is 5 to 30% by weight with respect to the basis weight of the filter layer (layer 2),
c) at least one textile covering layer (layer 1) which is applied to the filter layer in accordance with b), wherein the covering layer is formed from synthetic polymer fibres, and
c1) the textile covering layer, preferably the nonwoven, has a basis weight of 20 to 100 g/m²,
c2) the fibres of the textile covering layer, preferably of the nonwoven, have a diameter in the range 2 to 25 dtex,
c3) the textile covering layer, preferably the nonwoven, is consolidated by chemical binders or by thermoplastic binders,
c4) the quantity of chemical binder or of thermoplastic binder which is applied is 5 to 25% by weight with respect to the basis weight of the covering layer (layer 1),
c5) the textile covering layer, preferably the nonwoven, has an air permeability of at least 2500 L/m²sec,
**characterized in that** the glass fibres forming the filter layer (layer 2)
b4) comprise a mixture of at least two types of glass fibres,
b5) wherein first glass fibre type of the mixture in accordance with b4) has a diameter, determined as the mean value of a normal Gaussian distribution, of 0.6 µm ± 0.3 µm, preferably ± 0.2 µm, and
b6) wherein the second glass fibre type of the mixture in accordance with b4) has a diameter, determined as the mean value of a normal Gaussian distribution, of 1.0 µm ± 0.3 µm, preferably ± 0.2 µm, and
b7) wherein the first and second glass fibre types of the mixture in accordance with b4) are present in a ratio of 1 to 1.1 to 1 to 4, preferably 1 to 1.5 to 1 to 3, particularly preferably 1 to 2.

2. The filter as claimed in claim 1, **characterized in that** the textile supporting layer can be pleated.

3. The filter as claimed in claim 1 or claim 2, **characterized in that**, independently of each other, the textile supporting layer and/or the textile covering layer is a wet laid nonwoven fabric, spunbonded fabric or dry laid nonwoven fabric.

4. The filter as claimed in claim 3, **characterized in that** the textile supporting layer and/or the textile covering layer comprises staple fibre nonwovens and/or spunbonded fabrics.

5. The filter as claimed in one or more of claims 1 to 4, **characterized in that** the textile supporting layer and/or the textile covering layer is formed from thermoplastics, in particular polyesters and/or polyolefins.

6. The filter as claimed in one or more of claims 1 to 5, **characterized in that** the textile supporting layer has a basis weight of between 20 and 250 g/m², preferably between 20 and 100 g/m².

7. The filter as claimed in one or more of claims 1 to 6, **characterized in that** the fibres of the textile supporting layer, preferably of the nonwoven, have a diameter in the range 2 to 17 dtex for polymer fibres or 0.5 - 15 µm, preferably 8 to 15 µm, for glass fibres.

8. The filter as claimed in one or more of claims 1 to 7, **characterized in that** the textile covering layer, preferably the nonwoven, has a basis weight of 25 to 55 g/m².

9. The filter as claimed in one or more of claims 1 to 8, **characterized in that** the fibres of the textile covering layer, preferably of the nonwoven, have a diameter in the range 2 to 17 dtex, preferably 2 to 10 dtex.

10. The filter as claimed in one or more of claims 1 to 9, **characterized in that** the first and second glass fibre types of the mixture form at least 80% by weight of the fibres in the filter layer (layer 2); preferably, the first and second glass fibre types in the mixture form at least 98% by weight of the fibres in the filter layer (layer 2); in particular, the first and second glass fibre types of the mixture form 100% by weight of the fibres in the filter layer (layer 2).

11. The filter as claimed in one or more of claims 1 to 10, **characterized in that** the difference between the mean value for the first glass fibre type and the mean value for the second glass fibre type in the filter layer (layer 2) is at least 0.3 µm, particularly preferably at least 0.4 µm.

12. The filter as claimed in one or more of claims 1 to 11, **characterized in that** the filter layer (layer 2) is a dry laid nonwoven.

13. The filter as claimed in claim 12, **characterized in that** the dry laid nonwoven is produced using the air media method.

14. The filter as claimed in one or more of claims 1 to 13, **characterized in that** the fibres of the filter layer (layer 2) are exclusively mineral and/or glass fibres, preferably glass fibres.

15. A method for the production of the filter as claimed in claim 1, comprising the following steps:
a) forming the textile supporting layer (layer 3) or supplying the ready-formed textile supporting layer (layer 3) in the form of rolled goods,
b) forming the filter layer (layer 2) directly on the textile supporting layer (layer 3),
c) if appropriate, rolling up the material obtained in accordance with step b) and unrolling it to carry out step d),
d) forming the textile covering layer (layer 1) or supplying the ready-formed textile covering layer (layer 1),
or
A) forming the textile covering layer (layer 1) or supplying the ready-formed textile covering layer (layer 1) in the form of rolled goods,
B) forming the filter layer (layer 2) directly on the textile covering layer (layer 1),
C) if appropriate, rolling up the material obtained in accordance with step b. and unrolling it to carry out step d.,
D) forming the textile supporting layer (layer 3) or supplying the ready-formed textile supporting layer (layer 3),
e) calendaring the material obtained in accordance with step d) or step D).

16. The method in accordance with claim 15, **characterized in that** the filter layer (layer 2) is produced using glass fibres produced using the air media method.

17. Use of the filter defined in claims 1 to 14 in air/gas and liquid filtration, preferably for the filtration of air streams in air intakes and/or heat exchanger systems.

18. A filter module containing a housing and at least one filter as defined in claims 1 to 14.

## Revendications

1. Filtre, constitué d'un milieu filtrant multicouches comprenant :
a) au moins une couche de support textile (couche 3), de préférence une couche de non-tissé, en fibres polymères synthétiques, fibres de verre ou mélanges de ces dernières
a1) la couche de support textile, de préférence le non-tissé présentant un grammage de 10 à 300 g/m²,
a2) les fibres de la couche de support textile, de préférence du non-tissé, présentant un diamètre de l'ordre de 2 à 25 dtex pour des fibres polymères ou un diamètre de 0,5 à 15 µm pour des fibres de verre,
a3) la couche de support textile, de préférence le non-tissé, étant consolidée par des liants chimiques ou par des liants thermoplastiques,
a4) la couche de support textile, de préférence le non-tissé présentant une perméabilité à l'air d'au moins 750 l/m²seconde,
b) au moins une couche filtrante (couche 2), qui est appliquée sur au moins une face du non-tissé de soutien, la couche filtrante étant construite en fibres de verre et
b1) la couche filtrante en fibres de verre étant un non-tissé dont le grammage se situe entre 25 et 300 g/m²,
b2) le non-tissé en fibres de verre étant consolidé par des liants chimiques,
b3) la quantité d'application du liant chimique se situant entre 5 et 30 % en poids, rapportés au grammage de la couche filtrante (couche 2),
c) au moins une couche de recouvrement textile (couche 1) qui est appliquée sur la couche filtrante selon b), la couche de recouvrement étant construite en fibres polymères synthétiques, et
c1) la couche de recouvrement textile, de préférence le non-tissé présentant un grammage de 20 à 100 g/m²,
c2) les fibres de la couche de recouvrement textile, de préférence du non-tissé présentant un diamètre de l'ordre de 2 à 25 dtex,
c3) la couche de recouvrement textile, de préférence le non-tissé étant consolidée par des liants chimiques ou par des liants thermoplastiques,
c4) la quantité d'application du liant chimique ou du liant thermoplastique se situant entre 5 et 25 % en poids, rapportés au grammage de la couche de recouvrement (couche 1),
c5) la couche de recouvrement textile, de préférence le non-tissé faisant preuve d'une perméabilité à l'air d'au moins 2500 l/m²sec,
**caractérisé en ce que** les fibres de verre formant la couche filtrante (couche 2)
b4) comprennent un mélange d'au moins deux types de fibres de verre,
b5) le premier type de fibres de verre du mélange selon b4) présente un diamètre, déterminé comme valeur moyenne d'une distribution normale selon Gauß de 0,6 µm ± 0,3 µm, de préférence ± 0,2 µm, et
b6) le deuxième type de fibres de verre du mélange selon b4) présentant un diamètre, déterminé comme valeur moyenne d'une distribution normale selon Gauß de 1,0 µm ± 0,3 µm, de préférence ± 0,2µm, et
b7) les premier et deuxième types de fibres de verre du mélange selon b4) se présentant selon un rapport de mélange de l'ordre de 1 à 1.1 à 1 à 4, de préférence de 1 à 1.5 à 1 à 3, de manière particulièrement préférentielle, de 1 à 2.

2. Filtre selon la revendication 1, **caractérisé en ce que** la couche de support textile est plissable.

3. Filtre selon la revendication 1 ou 2, **caractérisé en ce qu'**indépendamment l'une de l'autre, la couche de support textile et/ou la couche de recouvrement textile est un non-tissé déposé par voie humide, un non-tissé en filaments continus ou un non-tissé déposé par voie sèche.

4. Filtre selon la revendication 3, **caractérisé en ce que** la couche de support textile et/ou la couche de recouvrement textile comprend des non-tissés en filaments discontinus et/ou des non-tissés en filaments continus.

5. Filtre selon l'une quelconque ou plusieurs des revendications 1 à 4, **caractérisé en ce que** la couche de support textile et/ou la couche de recouvrement textile est créée en matières thermoplastiques, notamment en polyester et/ou en polyoléfines.

6. Filtre selon l'une quelconque ou plusieurs des revendications 1 à 5, **caractérisé en ce que** la couche de support textile présente un grammage compris entre 20 et 250 g/m², de préférence entre 20 et 100 g/m².

7. Filtre selon l'une quelconque ou plusieurs des revendications 1 à 6, **caractérisé en ce que** les fibres de la couche de support textile, de préférence du non-tissé présentent un diamètre de l'ordre de 2 à 17 dtex pour des fibres polymères et de 0,5 à 15 µm, de préférence de 8 à 15 µm pour des fibres de verre.

8. Filtre selon l'une quelconque ou plusieurs des revendications 1 à 7, **caractérisé en ce que** la couche de recouvrement textile, de préférence le non-tissé présente un grammage de 25 à 55 g/m².

9. Filtre selon l'une quelconque ou plusieurs des revendications 1 à 8, **caractérisé en ce que** les fibres de la couche de recouvrement textile, de préférence du non-tissé présentent un diamètre de l'ordre de 2 à 17 dtex, de préférence de 2 à 10 dtex.

10. Filtre selon l'une quelconque ou plusieurs des revendications 1 à 9, **caractérisé en ce que** le premier et le deuxième types de fibres de verre du mélange forment au minimum 80 % en poids des fibres dans la couche filtrante (couche 2), de préférence, le premier et le deuxième types de fibres de verre du mélange forment au minimum 98 % en poids des fibres dans la couche filtrante (couche 2), notamment le premier et le deuxième types de fibres de verre du mélange forment 100 % en poids des fibres dans la couche filtrante (couche 2).

11. Filtre selon l'une quelconque ou plusieurs des revendications 1 à 10, **caractérisé en ce que** l'écart entre la valeur moyenne des premiers types de fibres de verre et la valeur moyenne des deuxièmes types de fibres de verre dans la couche filtrante (couche 2) s'élève à au moins 0,3 µm, de manière particulièrement préférentielle, à au moins 0,4 µm.

12. Filtre selon l'une quelconque ou plusieurs des revendications 1 à 11, **caractérisé en ce que** la couche filtrante (couche 2) est un non-tissé déposé par voie sèche.

13. Filtre selon la revendication 12, **caractérisé en ce que** le non-tissé déposé par voie sèche a été fabriqué par procédé Air Media.

14. Filtre selon l'une quelconque ou plusieurs des revendications 1 à 13, **caractérisé en ce que** les fibres de la couche filtrante (couche 2) sont exclusivement des fibres minérales et/ou des fibres de verre, de préférence des fibres de verre.

15. Procédé, destiné à fabriquer le filtre selon la revendication 1, comprenant les étapes consistant à :
a) créer la couche de support textile (couche 3) ou amener la couche de support textile (couche 3) déjà créée sous la forme d'un produit en rouleau,
b) créer la couche filtrante (couche 2) directement sur couche de support textile (couche 3),
c) le cas échéant, enrouler la matière obtenue selon l'étape b) et la dérouler pour réaliser l'étape d),
d) créer la couche de recouvrement textile (couche 1) ou amener la couche de recouvrement textile (couche 1) déjà créée,
ou
A) créer la couche de recouvrement textile (couche 1) ou amener la couche de recouvrement textile (couche 1) déjà créée sous la forme d'un produit en rouleau,
B) créer la couche filtrante (couche 2) directement sur la couche de recouvrement textile (couche 1),
C) le cas échéant, enrouler la matière obtenue selon l'étape b. et la dérouler pour réaliser l'étape d.,
D) créer la couche de support textile (couche 3) ou amener la couche de support textile (couche 3) déjà créée
e) calandrer la matière obtenue selon l'étape d) ou l'étape D).

16. Procédé selon la revendication 15, **caractérisé en ce que** la couche filtrante (couche 2) est constituée de fibres de verre générées selon la procédé Air Media.

17. Utilisation du filtre défini dans les revendications 1 à 14 dans le domaine de la filtration air/gaz et liquide, de préférence pour filtrer des flux d'air dans des entrées d'air et/ou dans des systèmes d'échangeurs thermiques.

18. Modules filtrants comprenant un boîtier et au moins un filtre défini dans les revendications 1 à 14.
